Europäisches Patentamt

European Patent Office

Office européen des brevets

(19)

(11) Veröffentlichungsnummer : **0 339 591 B1**

(12) # EUROPÄISCHE PATENTSCHRIFT

(45) Veröffentlichungstag der Patentschrift :
31.07.91 Patentblatt 91/31

(51) Int. Cl.⁵ : **F16L 58/16**, F16L 59/02, B32B 5/02, D04H 5/00

(21) Anmeldenummer : 89107505.3

(22) Anmeldetag : 26.04.89

(54) **Rohrleitungsschuss mit einer Ummantelung aus einem Isolierwerkstoff und einer darauf aufgewickelten Schutzumhüllung.**

(30) Priorität : 29.04.88 DE 3814488

(43) Veröffentlichungstag der Anmeldung :
02.11.89 Patentblatt 89/44

(45) Bekanntmachung des Hinweises auf die Patenterteilung :
31.07.91 Patentblatt 91/31

(84) Benannte Vertragsstaaten :
AT BE CH ES FR GB GR IT LI LU NL SE

(56) Entgegenhaltungen :
EP-A- 0 269 863
EP-A- 0 283 385
DE-A- 3 222 679
GB-A- 2 107 422
US-A- 4 144 370

(73) Patentinhaber : ISG ISOLIERCHEMIE GMBH & CO. KUNSTSTOFF KG
Postfach 1410
W-4352 Herten (DE)

(72) Erfinder : Vogelsang, Rolf
Zehlendorfer Strasse 6
W-4353 Herten (DE)

(74) Vertreter : Andrejewski, Walter et al
Patentanwälte Andrejewski, Honke & Partner
Postfach 10 02 54 Theaterplatz 3
W-4300 Essen 1 (DE)

## Beschreibung

Die Erfindung bezieht sich gattungsgemäß auf einen Rohrleitungsschuß aus Stahl oder Gußeisen mit einer Ummantelung aus einem Isolierwerkstoff und einer darauf aufgewickelten Schutzumhüllung, wobei die Schutzumhüllung ein Faservlies aus Kunststoffasern aufweist. Bei den entsprechenden Rohrleitungen mag es sich um Versorgungs- oder Entsorgungsrohre handeln. Solche Rohre werden regelmäßig erdverlegt. Als Isolierwerkstoff werden z.B. Bitumen, sogenannte Bitumen/Kunstharz-Legierungen, Lacke, insbesondere Lacke auf Kunstharzbasis, Butylkautschuk, Polyesterharze und ähnliche Isolierstoffe eingesetzt. Die Ummantelung dient der Isolierung und dem Korrosionsschutz. Sie bedarf ihrerseits des Schutzes gegen mechanische Beschädigungen, z.B. durch spitze Gesteinsbrocken u. dgl.. Zu diesem Zweck dient die Schutzumhüllung. Sie wird werksmäßig oder beim Verlegen aufgebracht.

Bei dem aus der Praxis bekannten gattungsgemäßen Rohrleitungsschuß, von dem die Erfindung ausgeht, besteht die Schutzumhüllung lediglich und ausschließlich aus dem Faservlies. Dieses ist aus verhältnismäßig dünnen Kunststoffasern aufgebaut, beispielsweise so, daß das Flächengewicht 400g/m² oder 500g/m² beträgt. Die Kunststoffasern bestehen z.B. aus Polyolefinen, Polyvinylchlorid, Polyester, Polyamid oder auch verschiedenen Mischungen. Ein solches Faservlies aus Kunststoffasern hat im trockenen Zustand zwar eine ausreichende, jedoch keine besondere Festigkeit. Das Faservlies der Schutzumhüllung kann und soll sich mit Grundwasser vollsaugen, damit im Bedarfsfall ein kathodischer Korrosionsschutz funktioniert. Das Faservlies is entsprechend aufgebaut oder ausgerüstet. Nachteilig ist, daß das Faservlies, wenn es sich mit Wasser vollgesogen hat, erheblich an Festigkeit verliert und seinerseits leicht beschädigt wird. Dann können auch Beschädigungen der Ummantelung aus Isolierwerkstoff nicht ausgeschlossen werden.

Um die beschriebenen Nachteile zu vermeiden, ist vorgeschlagen worden, anstelle der Schutzumhüllung aus Faservlies eine solche aus einem grobmaschigen Gitter zu verwenden, welches aus Kunststoff gespritzt ist und eine Maschenweite von bis zu 1 cm und mehr aufweist. Das ist deshalb nachteilig, weil der sogenannte Felsschutz nicht ausreichend ist, denn kleine Gesteinsbrocken können diese Maschen durchdringen und die Ummantelung aus dem Isolierwerkstoff beschädigen.

Der Erfindung liegt die Aufgabe zugrunde, einen gattungsgemäßen Rohrleitungsschuß so weiter auszubilden, daß die Sicherheit gegen Beschädigungen der Ummantelung aus Isolierwerkstoff wesentlich verbessert ist.

Zur Lösung dieser Aufgabe lehrt die Erfindung, daß die Schutzumhüllung aus einem Aggregat aus dem Faservlies und einem offenmaschigen Gitter aus Kunststoffmonofilamenten besteht, wobei Fasern des Faservlieses durch die Maschen des Gitters hindurchgezogen sowie dadurch das Faservlies und das Gitter vereinigt sind, und daß das Aggregat mit dem Gitter nach außen auf die Ummantelung aus Isolierwerkstoff aufgewickelt ist. Nach bevorzugter Ausführungsform der Erfindung ist das Gitter als offenmaschiges Gewebe ausgeführt, Maschenweite im Millimeterbereich. Das Gitter kann aber auch als offenmaschiges Gewirke ausgeführt sein, Maschenweite ebenfalls im Millimeterbereich. Die Kunststoffmonofilamente, aus denen das Gitter besteht, sind beispielsweise Polyamidfasern oder Polyesterfasern. Maschenweite im Millimeterbereich, bedeutet, daß die Maschenweite nicht zu groß ist, damit auch kleine Gesteinsbrocken durch die Maschen nicht hindurchgreifen können. Eine geeignete Maschenweite liegt im Bereich von 1 bis 3 mm, vorzugsweise bei etwa 2 mm. — Die Fasern des Faservlieses können auf sehr einfache Weise durch die Maschen des Gitters hindurchgezogen werden, und zwar durch sogenanntes Nadeln. Dazu kennt man in der Textiltechnik entsprechende Einrichtungen.

Um einen besonders innigen Verbund zwischen der Schutzumhüllung und der Ummantelung aus Isolierwerkstoff herzustellen, empfiehlt die Erfindung, daß das Gitter und damit das Aggregat zumindest in Wickelrichtung dehnbar, vorzugsweise elastisch dehnbar ausgeführt sind. Beim Aufwickeln wird diese Dehnbarkeit ausgenutzt und die Schutzumhüllung wird dadurch unter Vorspannung aufgewickelt. Im Rahmen der Erfindung liegt es, das Gitter als Kennzeichnungsträger auszubilden, z.B. mit einer Farbe zu versehen. Dann ist auf einfache Weise eine Identifizierung der Rohrleitungsschüsse beim Verlegen, aber auch eine Identifizierung der verlegten Rohrleitungsschüsse möglich, beispielsweise zum Zwecke der Differenzierung zwischen Entsorgung und Versorgung.

Im folgenden wird die Erfindung anhand einer lediglich ein Ausführungsbeispiel darstellenden Zeichnung ausführlicher erläutert. Es zeigen in schematischer Darstellung

| | |
|---|---|
| Fig. 1 | die Ansicht eines erfindungsgemäßen Rohrleitungsschusses, ausschnittsweise, |
| Fig. 2 | in gegenüber der Fig. 1 wesentlich vergrößertem Maßstab einen Schnitt in Richtung A-A durch den Gegenstand nach Fig. 1, |
| Fig. 3 | einen Ausschnitt aus der Schutzumhüllung, vor dem Aufwickeln, |
| Fig. 4 | einen vergrößerten Ausschnitt aus dem Gegenstand nach Fig. 3, und |
| Fig. 5 | einen Schnitt in Richtung B-B durch den Gegenstand der Fig. 4. |

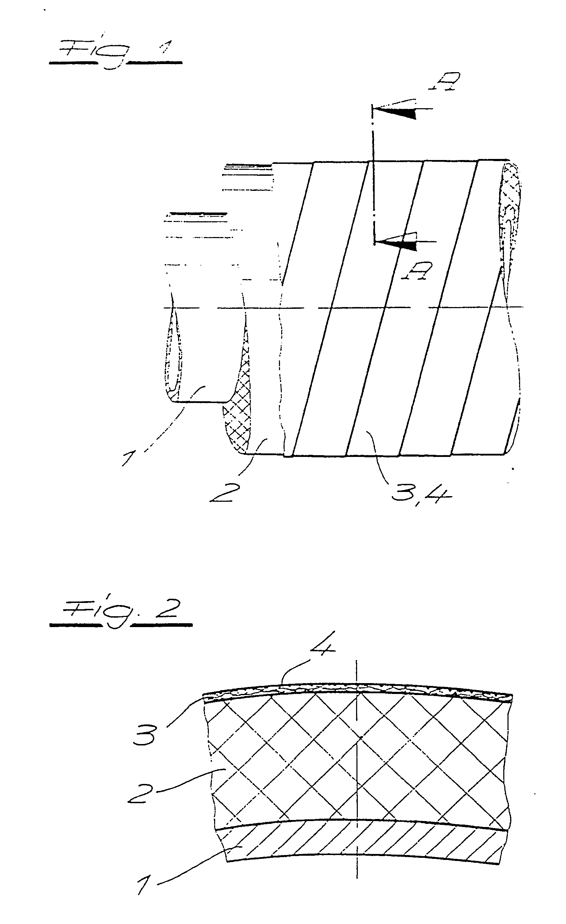

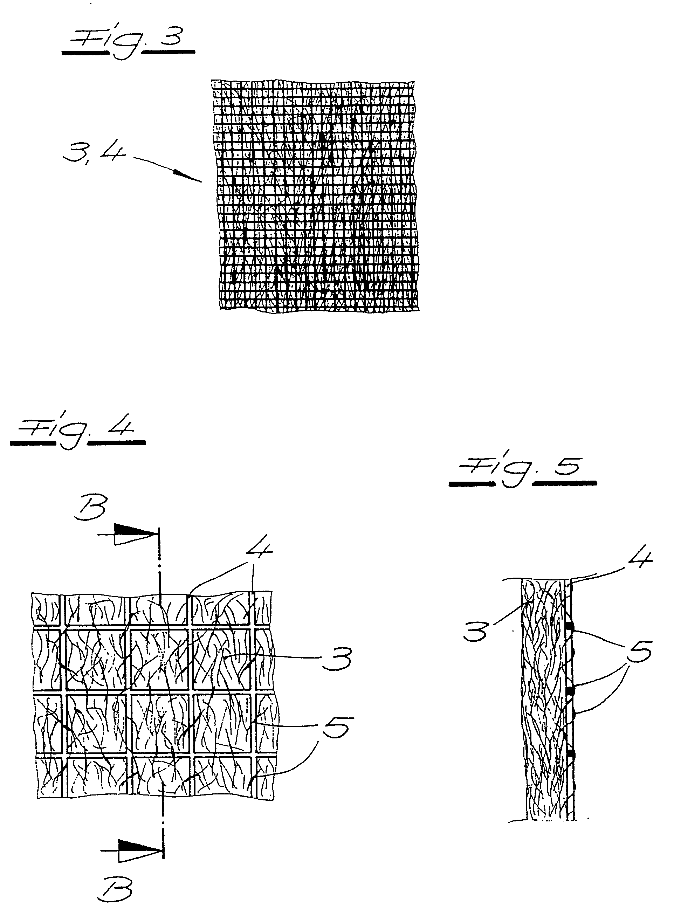

Der in den Fig. 1 und 2 dargestellte Rohrleitungsschuß 1 besteht aus Stahl oder Gußeisen. Er besitzt eine Ummantelung 2 aus einem Isolierwerkstoff und eine darauf aufgewickelte Schutzumhüllung 3, 4. Die Schutzumhüllung 3, 4 weist ein Faservlies 3 aus Kunststoffasern auf. Insbesondere aus einer vergleichenden Betrachtung der Fig. 3 und 5 entnimmt man, daß die Schutzumhüllung 3, 4 aus einem Aggregat aus dem Faservlies 3 und einem offenmaschigen Gitter 4 aus Kunststoffmonofilamenten besteht. Fasern 5 des Faservlieses 3 sind durch die Maschen des Gitters 4 hindurchgezogen. Faservlies 3 und Gitter 4 sind dadurch vereinigt. Die Anordnung ist so getroffen, daß das Aggregat 3, 4 mit dem Gitter 4 nach außen auf die Ummantelung 2 aus Isolierwerkstoff aufgewickelt ist. Im Ausführungsbeispiel ist das Gitter 4 ein offenmaschiges Gewebe. Die Maschenweite liegt im Millimeterbereich. Das Gitter 4 könnte aber auch als Gewirke ausgeführt sein. Nicht erkennbar ist, daß das Gitter 4 und damit das Aggregat 3, 4 zumindest in Wickelrichtung dehnbar, vorzugsweise elastisch dehnbar ist. — Gegenstand der Erfindung ist auch ein Aggregat 3, 4 aus dem Faservlies 3 und einem offenmaschigen Gitter 4 aus Kunststoffmonofilamenten, wobei Fasern 5 des Faservlieses durch sogenanntes Nadeln durch die Maschen des Gitters 4 hindurchgezogen und dadurch Faservlies 3 und Gitter 4 vereinigt sind.

Die Schutzumhüllung 3, 4 kann, wie dargestellt, schraubenwendelförmig, aber auch in breiten Bahnabschnitten in Umfangsrichtung, durchgeführt sein. Stets wird man dabei mit Überlappung arbeiten. Im Überlappungsbereich kann auch eine Verschweißung oder Verklebung erfolgen.

## Patentansprüche

1. Rohrleitungsschuß aus Stahl oder Gußeisen mit einer Ummantelung aus einem Isolierwerkstoff und einer darauf aufgewickelten Schutzumhüllung, wobei die Schutzumhüllung ein Faservlies aus Kunststoffasern aufweist, **dadurch gekennzeichnet,** daß die Schutzumhüllung (3, 4) aus einem Aggregat aus dem Faservlies (3) und einem offenmaschigen Gitter (4) aus Kunststoffmonofilamenten besteht, wobei Fasern (5) des Faservlieses (3) durch die Maschen des Gitters (4) hindurchgezogen sowie dadurch das Faservlies (3) und das Gitter (4) vereinigt sind,
und daß das Aggregat (3, 4) mit dem Gitter (4) nach außen auf die Ummantelung (2) aus Isolierwerkstoff aufgewickelt ist.

2. Rohrleitungsschuß nach Anspruch 1, dadurch gekennzeichnet, daß das Gitter (4) als offenmaschiges Gewebe ausgeführt ist, Maschenweite im Millimeterbereich.

3. Rohrleitungsschuß nach Anspruch 1, dadurch gekennzeichnet, daß das Gitter (4) als offenmaschiges Gewirke ausgeführt ist, Maschenweite im Millimeterbereich.

4. Rohrleitungsschuß nach einem der Ansprüche 1 bis 3, dadurch gekennzeichnet, daß das Gitter (4) und damit das Aggregate (3, 4) zumindest in Wickelrichtung dehnbar, vorzugsweise elastisch dehnbar, ausgeführt sind.

5. Rohrleitungsschuß nach einem der Ansprüche 1 bis 4, dadurch gekennzeichnet, daß das Gitter (4) als Kennzeichnungsträger ausgebildet ist, z.B. einen Farbstoff aufweist.

## Claims

1. A length of steel or cast iron piping with a sleeve of insulation material and a protective cover wrapped around the latter, in which the protective cover possesses a fibre mat of synthetic fibres, *characterized in that* the protective cover (3, 4) consists of an assembly of the fibre mat (3) and an open-mesh lattice (4) of synthetic monofilaments, in which fibres (5) of the fibre mat (3) are pulled through the meshes of the lattice (4) and thereby the fibre mat (3) and the lattice (4) are united,
and that the assembly (3, 4) is wrapped around the sleeve (2) of insulation material with lattice (4) on the outside.

2. A length of piping according to Claim 1, *characterized in that* the lattice (4) is constructed as an open-mesh weave, the mesh width being in the millimetre range.

3. A length of piping according to Claim 1, *characterized in that* the lattice (4) is constructed as open-mesh knitting, the mesh width being in the millimetre range.

4. A length of piping according to one of Claims 1 to 3, *characterized in that* the lattice (4) and with it the assembly (3, 4) is constructed to be extensible, particularly in the wrapping direction, and preferably elastically extensible.

5. A length of piping according to one of Claims 1 to 4, *characterized in that* the lattice (4) is constructed to carry an identification, e.g. possesses colouring matter.

## Revendications

1. Elément de pipeline en acier ou en fonte avec une enveloppe constituée d'un matériau isolant sur laquelle est enroulée une gaine protectrice, la gaine protectrice comprenant un matelas de fibres de matière plastique, **caractérisé par le fait** que la gaine protectrice (3, 4) est constituée d'un agrégat comprenant le matelas de fibres (3) et un grillage (4) à mailles ouvertes de monofilaments de matière plastique, des fibres (5) du matelas de fibres (3) étant tirées au travers des mailles du grillage (4) réunissant ainsi le matelas de fibres (3) et le grillage (4) ; et que l'agrégat (3, 4) est enroulé sur l'enveloppe (2) de matériau isolant avec le grillage (4) dirigé vers l'extérieur.

2. Elément de pipeline selon la revendication 1, caractérisé par le fait que le grillage (4) est réalisé sous la forme d'un tissu à mailles ouvertes, avec une ouverture de maille dans la plage millimétrique.

3. Elément de pipeline selon la revendication 1, caractérisé par le fait que le grillage (4) est réalisé sous la forme d'un tricot, avec une ouverture de maille dans la plage millimétrique.

4. Elément de pipeline selon l'une des revendications 1 à 3, caractérisé par le fait que le grillage (4) et donc l'agrégat (3, 4) est extensible, de préférence élastique, du moins dans la direction de l'enroulement.

5. Elément de pipeline selon l'une des revendications 1 à 4, caractérisé par le fait que le grillage (4) est conformé en support d'identification, par exemple qu'il contient un colorant.

Fig. 1

Fig. 2

_Fig. 3_

3,4

_Fig. 4_

B

4

3

5

B

_Fig. 5_

4

3

5